# EUROPÄISCHE PATENTSCHRIFT

(11) **EP 1 679 218 B1**
(45) Veröffentlichungstag und Bekanntmachung des Hinweises auf die Patenterteilung: **05.09.2007**
(21) Anmeldenummer: 06100106.1
(22) Anmeldetag: 05.01.2006
(51) Int. Cl.: B60K 17/28

(54) **Vorrichtung zum Übertragen eines Drehmoments**
Device for transmitting a torque
Dispositif de transmission de couple

(30) Priorität: 05.01.2005 US 29683
(43) Veröffentlichungstag der Anmeldung: 12.07.2006
(73) Patentinhaber: Deere & Company, Moline, IL 61265-8098 (US)
(72) Erfinder: Rodeghiero, Reno Antonio, 50643, Hudson (US); Stettler, Werner, 50613, Cedar Falls (US); Klabunde, Barbara, 50701, Waterloo (US); Niebergall, James A, 50612, Buckingham (US)
(74) Vertreter: Bradl, Joachim

(56) Entgegenhaltungen:
- DE-A1- 19 749 074
- US-A1- 2003 205 422
- US-B2- 6 692 395
- PATENT ABSTRACTS OF JAPAN Bd. 2002, Nr. 03, 3. April 2002 (2002-04-03) -& JP 2001 315541 A (YANMAR AGRICULT EQUIP CO LTD), 13. November 2001 (2001-11-13)
- PATENT ABSTRACTS OF JAPAN Bd. 006, Nr. 246 (M-176), 4. Dezember 1982 (1982-12-04) -& JP 57 144129 A (ISEKI NOKI KK), 6. September 1982 (1982-09-06)

## Beschreibung

Die vorliegende Erfindung betrifft eine Vorrichtung zum Übertragen eines Drehmoments bzw. einer mechanischen Leistung von einer mittels einer Antriebseinheit angetriebenen Welle auf eine Zapfwelle (PTO = Power Take Off). Die Vorrichtung umfasst eine variable Drehzahleinheit und ein leistungsverzweigtes Getriebe. Die variable Drehzahleinheit ist von einer Antriebseinheit antreibbar. Das leistungsverzweigte Getriebe weist eine erste Eingangsschnittstelle, eine zweite Eingangsschnittstelle und eine Ausgangsschnittstelle auf. Die erste Eingangsschnittstelle ist mit der von der Antriebseinheit angetriebenen Welle gekoppelt. Die zweite Eingangsschnittstelle ist mit der variablen Drehzahleinheit gekoppelt bzw. ist von der variablen Drehzahleinheit antreibbar. Die Ausgangsschnittstelle ist mit der Zapfwelle gekoppelt. Die Ausgangsschnittstelle empfängt ein Drehmoment von den ersten und zweiten Eingangsschnittstellen. Die Ausgangsschnittstelle weist eine Drehzahl auf, welche von der Drehzahl der ersten und der zweiten Eingangsschnittstelle abhängt.

Ein Zapfwellengetriebesystem mit einer leistungsverzweigten Getriebeeinheit mit einem Planetengetriebe ist beispielsweise aus der US 6,692,395 bekannt. Mit diesem System kann Leistung bzw. ein Drehmoment von einer Antriebseinheit auf eine Zapfwelle übertragen werden, wobei die Drehzahl der Zapfwelle konstant gehalten werden kann, obwohl die Drehzahl der Antriebseinheit variieren kann.

Diese Getriebeeinheit weist eine Ausgangsschnittstelle auf, welche mit der Zapfwelle verbunden ist, eine erste Eingangsschnittstelle, welche mit einer Ausgangswelle der Antriebseinheit verbunden ist, und eine zweite Eingangsschnittstelle, welche an einen Abtrieb eines Konstant-Hydraulikmotors gekoppelt ist. Der Konstant-Hydraulikmotor wird von einer Verstellpumpe angetrieben, welche von einem Abtrieb der Antriebseinheit angetrieben wird. Eine Steuereinheit steuert die Geschwindigkeit der variablen Drehzahleinheit (welche die Verstellpumpe und den Konstant-Hydraulikmotor aufweist) als eine Funktion der detektierten Drehzahl der Antriebseinheit, um die Drehzahl der Zapfwelle konstant zu halten.

Dieses System überträgt ein Drehmoment einerseits von der Antriebseinheit und andererseits von der variablen Drehzahleinheit auf die Zapfwelle. Dadurch dass eine konstante Drehzahl der Zapfwelle eingehalten wird, wird ermöglicht, dass von der Zapfwelle angetriebe Arbeitsgeräte, wie zum Beispiel Grass-/Heuwender, optimiert betrieben werden können. Dieses System weist eine erhöhte Kraftstoffeffizienz und eine verringerte Geräuschemission auf.

Falls allerdings die Antriebseinheit mit Drehzahlen betrieben wird, welche einer vorgegebenen oder angegebenen Drehzahl oder höher entspricht, muss das Sonnenrad des Getriebes/Planetengetriebes blockiert werden, um ein Überdrehung der Zapfwelle zu verhindern. Das Blockieren des Sonnenrads kann dadurch erfolgen, dass die Verstellpumpe eine Verdrängung von 0 aufweist. Somit wird verhindert, dass der mit dem Sonnenrad gekoppelte Konstant-Hydraulikmotor rotiert. Diese Vorgehensweise erfordert allerdings einen größeren Konstant-Hydraulikmotor mit einer größeren Drehmomentkapazität, um die Drehung/Rotation des Sonnenrads in einer solchen Situation zu verhindern.

Der vorliegenden Erfindung liegt daher die Aufgabe zugrunde, eine Vorrichtung der eingangs genannten Art anzugeben und weiterzubilden, durch welches die vorgenannten Probleme überwunden werden. Insbesondere soll eine - vorzugsweise kompakte - Getriebeeinheit angegeben und weitergebildet werden, welche eine konstante Drehzahl der Zapfwelle trotz eventueller Variationen der Drehzahl der Antriebseinheit ermöglicht.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Vorrichtung der eingangs genannten Art dadurch gekennzeichnet, dass eine unidirektionale Kupplungseinheit vorgesehen ist, welche mit der zweiten Eingangsschnittstelle gekoppelt ist. Die unidirektionale Kupplungseinheit verhindert, dass die zweite Eingangsschnittstelle in einer Drehrichtung rotiert, welche ein Überschreiten einer vorgebbaren Drehzahl der Ausgangsschnittstelle und/oder der Zapfwelle verhindert. Die Verwendung der Kupplungseinheit ermöglicht in vorteilhafter Weise eine kostengünstigere und kompaktere Bauweise, da ein Konstant-Hydraulikmotor kleinerer Leistungsstufe verwendet werden kann.

In einer ganz besonders bevorzugten Ausführungsform weist das Getriebe ein Planetengetriebe auf. Es könnte ein Hohlrad, einen Planetenträger, Planetenzahnräder und ein Sonnenrad vorgesehen sein. Das Hohlrad ist von der von der Antriebseinheit antreibbaren Welle antreibbar. Der Planetenträger ist drehbar mit der Zapfwelle gekoppelt. Die Planetenzahnräder sind drehbar an dem Planetenträger angeordnet und stehen mit dem Hohlrad in kämmendem Eingriff. Das Sonnenrad steht in kämmendem Eingriff mit den Planetenzahnrädern.

Bevorzugt ist das Sonnenzahnrad drehbar mit der variablen Drehzahleinheit und der unidirektionalen Kupplungseinheit gekoppelt.

Die unidirektionale Kupplungseinheit könnte eine Freilaufkupplung aufweisen, wie sie beispielsweise unter der Bezeichnung "SO/SX-Series" von der Firma Renold Jeffrey, Renold House, Styal Road, Wythenshawe, Manchester, M22 5WL, Großbritannien, auf dem Markt angeboten werden.

Die zweite Eingangsschnittstelle könnte ein Sonnenrad aufweisen und/oder die erste Eingangsschnittstelle könnte ein Hohlrad aufweisen.

Gemäß einer besonders bevorzugten Ausführungsform weist die variable Drehzahleinheit eine Verstellpumpe und einen Konstant-Hydraulikmotor auf. Die Verstellpumpe ist von der von der Antriebseinheit antreibbaren Welle antreibbar. Der Konstant-Hydraulikmotor ist hydraulisch von der Verstellpumpe antreibbar. Die Verstellpumpe weist eine Welle auf, welche mit dem Planetengetriebe koppelbar ist.

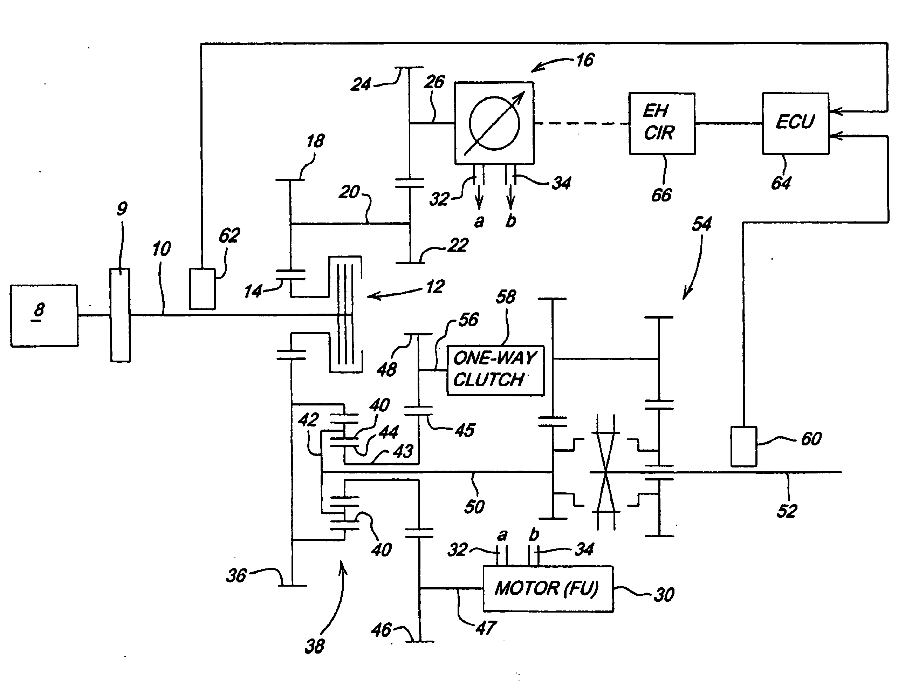

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung des bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige

### Fig. in einer schematischen Darstellung ein erfindungsgemäßes Ausführungsbeispiel.

Das in der einzigen Figur gezeigte Ausführungsbeispiel zeigt eine Vorrichtung zum Übertragen eines Drehmoments von einer mittels einer Antriebseinheit angetriebenen Welle auf eine Zapfwelle. Die in Form eines Verbrennungsmotors 8 ausgebildete Antriebseinheit treibt die Welle 10 über eine Drehzahlverringerungseinheit 9 an. Die Welle 10 rotiert in einer Richtung entgegengesetzt dem Uhrzeigersinn, wenn die Welle 10 von der Rückseite oder von der rechten Seite aus der einzigen Figur gesehen. Die Welle 10 treibt eine Zapfwellengetriebekupplung 12 an, welche ein Zapfwellenkupplungszahnrad 14 antreibt. Das Zapfwellenkupplungszahnrad 14 treibt eine Verstellpumpe 16 über das Zahnrad 18, die Welle 20, die Zahnräder 22, 24 und die Welle 26 an. Die Verstellpumpe 16 zirkuliert Hydraulikflüssigkeit zu einem Konstant-Hydraulikmotor 30 über die Hydraulikleitungen 32, 34. Dementsprechend bildet die Verstellpumpe 16 und der Konstant-Hydraulikmotor 30 eine variable Drehzahleinheit.

Das Zapfwellenkupplungszahnrad 14 treibt das Hohlrad 36 der Planetengetriebeeinheit 38 an. Die Planetengetriebeeinheit 38 weist Planetenzahnräder 40 auf, welche mit dem Hohlrad 36 gekoppelt und drehbar an dem Planetenträger 42 angeordnet sind. Die Planetengetriebeeinheit 38 weist weiterhin ein kleineres Sonnenzahnrad 44 auf, welches drehfest an dem einen Ende einer Hohlwelle 43 befestigt ist und mit den Planetenzahnrädern 40 gekoppelt ist. Ein im Durchmesser größeres Sonnenzahnrad 45 ist drehfest an dem anderen Ende der Hohlwelle 43 befestigt und ist mit dem Motorzahnrad 46 und dem Einweg-Kupplungszahnrad 48 gekoppelt. Das Motorzahnrad 46 wird von dem Konstant-Hydraulikmotor 30 über die Welle 47 angetrieben. Die Welle 50 koppelt den Planetenträger 42 mit der Zapfwelle 52 über eine zweistufige Zapfwellendrehzahl-Umschalteinheit 54. Die Zapfwelle dreht entweder mit 540 oder mit 1000 Umdrehungen pro Minute (RPM). Die Zapfwelle 52 dreht im Uhrzeigersinn, wenn von der Rückseite oder von der rechten Seite aus der einzigen Figur gesehen.

Bevorzugt ist ein Zapfwellendrehzahlsensor 60 vorgesehen, welcher die Drehzahl der Zapfwelle 52 detektiert. Es ist ein Drehzahlsensor 62 zum Detektieren der Drehzahl der Welle 10 vorgesehen. Eine elektrische Steuereinheit (ECU) 64 steuert bzw. regelt die Einstellung der Verstellpumpe 16 mittels eines elektro-hydraulischen Schaltkreises 66 in Abhängigkeit der Drehzahlsignale der Drehzahlsensoren 60, 62.

Die Welle 56 koppelt das Kupplungszahnrad 48 an eine unidirektionalen Kupplungseinheit 58, welche beispielsweise in Form einer Freilaufkupplung ausgebildet sein könnte. Die Kupplungseinheit 58 ermöglicht eine Rotation im entgegengesetzten Uhrzeigersinn, nicht jedoch im Uhrzeigersinn, wenn von der Rückseite oder von der rechten Seite aus der einzigen Figur gesehen. Somit verhindert die unidirektionale Kupplungseinheit 58 eine Rotation des Sonnenrads 45 bzw. 44 in eine entsprechende Richtung und verhindert somit, dass die Zapfwelle 52 eine Drehzahl aufweist, die größer als eine vorgebbare Grenzdrehzahl ist, falls der Verbrennungsmotor 8 mit einer Drehzahl betrieben wird, welche eine vorgebbare Verbrennungsmotordrehzahl oder höher aufweist. Die Kupplungseinheit 58 ermöglicht eine nahezu 100-prozentige Drehmomentübertragung über die Planetengetriebeeinheit bei vorgegebenen Verbrennungsmotordrehzahlen.

Abschließend sei ganz besonders darauf hingewiesen, dass das voranstehend erörterte Ausführungsbeispiel lediglich zur Beschreibung der beanspruchten Lehre dient, diese jedoch nicht auf das Ausführungsbeispiel einschränken.

## Patentansprüche

1. Vorrichtung zum Übertragen eines Drehmoments von einer mittels einer Antriebseinheit angetriebenen Welle (10) auf eine Zapfwelle (PTO), mit einer variablen Drehzahleinheit (16, 30) und einem leistungsverzweigten Getriebe, wobei die variable Drehzahleinheit (16, 30) von der Antriebseinheit (8) antreibbar ist, wobei das leistungsverzweigte Getriebe eine erste Eingangsschnittstelle (36), eine zweite Eingangsschnittstelle (44) und eine Ausgangsschnittstelle (50) aufweist, wobei die erste Eingangsschnittstelle (36) mit der von der Antriebseinheit (8) angetriebenen Welle (10) gekoppelt ist, wobei die zweite Eingangsschnittstelle (44) mit der variablen Drehzahleinheit (16, 30) gekoppelt ist, wobei die Ausgangsschnittstelle (50) mit der Zapfwelle (52) gekoppelt ist, wobei die Ausgangsschnittstelle (50) ein Drehmoment von den ersten und zweiten Eingangsschnittstellen (36, 44) empfängt, wobei die Ausgangsschnittstelle (50) eine Drehzahl aufweist, welche von der Drehzahl der ersten und der zweiten Eingangsschnittstelle (36, 44) abhängt,
**dadurch gekennzeichnet, dass** eine unidirektionale Kupplungseinheit (58) vorgesehen ist, welche mit der zweiten Eingangsschnittstelle (44) gekoppelt ist, und dass die unidirektionale Kupplungseinheit (58) verhindert, dass die zweite Eingangsschnittstelle (44) in einer Drehrichtung rotiert, welche ein Überschreiten einer vorgebbaren Drehzahl der Ausgangsschnittstelle (50) und/oder der Zapfwelle (52) verhindert.

2. Vorrichtung nach Anspruch 1, **dadurch gekennzeichnet, dass** das Getriebe ein Planetengetriebe (38) aufweist.

3. Vorrichtung nach Anspruch 1 oder 2, **dadurch gekennzeichnet, dass** das Getriebe ein Hohlrad (36), einen Planetenträger (42), Planetenzahnräder (40) und ein Sonnenrad (44) aufweist, wobei das Hohlrad (36) von der von der Antriebseinheit (8) antreibbaren Welle (10) antreibbar ist, wobei der Planetenträger (42) drehbar mit der Zapfwelle (52) gekoppelt ist, wobei die Planetenzahnräder (40) drehbar an dem Planetenträger (42) angeordnet sind und in kämmendem Eingriff mit dem Hohlrad (36) stehen, und wobei das Sonnenrad (44) in kämmendem Eingriff mit den Planetenzahnrädern (40) steht.

4. Vorrichtung nach Anspruch 3, **dadurch gekennzeichnet, dass** das Sonnenzahnrad (44, 45) drehbar mit der variablen Drehzahleinheit (16, 34) und der unidirektionalen Kupplungseinheit (58) gekoppelt ist.

5. Vorrichtung nach einem der Ansprüche 1 bis 4, **dadurch gekennzeichnet, dass** die unidirektionale Kupplungseinheit (58) eine Freilaufkupplung aufweist.

6. Vorrichtung nach einem der Ansprüche 1 bis 5, **dadurch gekennzeichnet, dass** die zweite Eingangsschnittstelle (44) ein Sonnenrad (44) aufweist und/oder dass die erste Eingangsschnittstelle (36) ein Hohlrad aufweist.

7. Vorrichtung nach einem der Ansprüche 1 bis 6, **dadurch gekennzeichnet, dass** die variable Drehzahleinheit (16, 34) eine Verstellpumpe (16) und einen Konstant-Hydraulikmotor (30) aufweist, wobei die Verstellpumpe (16) von der von der Antriebseinheit (8) antreibbaren Welle (10) antreibbar ist, wobei der Konstant-Hydraulikmotor (30) hydraulisch von der Verstellpumpe (16) antreibbar ist, wobei die Verstellpumpe (16) eine Welle aufweist, welche mit dem Planetengetriebe (38) koppelbar ist.

## Claims

1. Apparatus for transferring a torque from a shaft (10) driven by means of a drive unit to a power take-off shaft (PTO), comprising a variable speed unit (16, 30) and a power-split gear unit, wherein the variable speed unit (16, 30) can be driven by the drive unit (8), wherein the power-split gear unit has a first input interface (36), a second input interface (44) and an output interface (50), wherein the first input interface (36) is coupled to the shaft (10) driven by the drive unit (8), wherein the second input interface (44) is coupled to the variable speed unit (16, 30), wherein the output interface (50) is coupled to the power take-off shaft (52), wherein the output interface (50) receives a torque from the first and second input interfaces (36, 44), wherein the output interface (50) has a speed which is dependent on the speed of the first and second interfaces (36, 44), **characterized in that** a one-way clutch unit (58) is provided, which is coupled to the second input interface (44), and **in that** the one-way clutch unit (58) prevents the second input interface (44) from rotating in a rotational direction, which prevents a predefinable speed of the output interface (50) and/or of the power take-off shaft (52) from being exceeded.

2. Apparatus according to Claim 1, **characterized in that** the gear unit is a planetary gearing (38).

3. Apparatus according to Claim 1 or 2, **characterized in that** the gear unit has a ring gear (36), a planet carrier (42), planetary gears (40) and a sun gear (44), wherein the ring gear (36) can be driven by the shaft (10) drivable by the drive unit (8), wherein the planet carrier (42) is rotatably coupled to the power take-off shaft (52), wherein the planetary gears (40) are disposed rotatably on the planet carrier (42) and are in meshing engagement with the ring gear (36), and wherein the sun gear (44) is in meshing engagement with the planetary gears (40).

4. Apparatus according to Claim 3, **characterized in that** the sun gear (44, 45) is coupled rotatably to the variable speed unit (16, 34) and the one-way clutch unit (58).

5. Apparatus according to one of Claims 1 to 4, **characterized in that** the one-way clutch unit (58) has a freewheel clutch.

6. Apparatus according to one of Claims 1 to 5, **characterized in that** the second input interface (44) has a sun gear (44), and/or **in that** the first input interface (36) has a ring gear.

7. Apparatus according to one of Claims 1 to 6, **characterized in that** the variable speed unit (16, 34) has a variable displacement pump (16) and a constant hydraulic motor (30), wherein the variable displacement pump (16) can be driven by the shaft (10) drivable by the drive unit (8), wherein the constant hydraulic motor (30) can be hydraulically driven by the variable displacement pump (16), and wherein the variable displacement pump (16) has a shaft which can be coupled to the planetary gearing (38).

## Revendications

1. Dispositif de transmission d'un couple de rotation depuis un arbre (10), actionné au moyen d'une unité d'entraînement, sur un arbre de prise de force (PTO), comportant une unité de vitesse de rotation variable (16, 30) et un engrenage à puissance ramifiée, l'unité de vitesse de rotation variable (16, 30) pouvant être actionnée par l'unité d'entraînement (8), l'engrenage à puissance ramifiée comportant une première interface d'entrée (36), une deuxième interface d'entrée (44) et une interface de sortie (50), la première interface d'entrée (36) étant couplée à l'arbre (10) actionné par l'unité d'entraînement (8), la deuxième interface d'entrée (44) étant couplée à l'unité de vitesse de rotation variable (16, 30), l'interface de sortie (50) étant couplée à l'arbre de prise de force (52), l'interface de sortie (50) recevant un couple de rotation de la première et de la deuxième interface d'entrée (36, 44), l'interface de sortie (50) ayant une vitesse de rotation qui dépend de la vitesse de rotation de la première et de la deuxième interface d'entrée (36, 44), **caractérisé en ce qu'**il est prévu une unité de couplage unidirectionnelle (58), qui est couplée à la deuxième interface d'entrée (44) et **en ce que** l'unité de couplage unidirectionnelle (58) empêche que la deuxième interface d'entrée (44) tourne dans une direction de rotation, qui empêche que l'interface de sortie (50) et/ou l'arbre de prise de force (52) dépassent une vitesse de rotation prédéfinissable.

2. Dispositif selon la revendication 1, **caractérisé en ce que** l'engrenage est un engrenage planétaire (38).

3. Dispositif selon la revendication 1 ou 2, **caractérisé en ce que** l'engrenage comporte une couronne (36), un porte-satellites (42), des satellites (40) et une roue solaire (44), la couronne (36) étant apte à être actionnée par l'arbre (10) actionnable par l'unité d'entraînement (8), le porte-satellites (42) étant couplé de manière rotative avec l'arbre de prise de force (52), les satellites (40) étant montés rotatifs sur le porte-satellites (42) et engrenant avec la couronne (36), et la roue solaire (44) engrenant avec les satellites (40).

4. Dispositif selon la revendication 3, **caractérisé en ce que** la roue solaire (44, 45) est couplée de manière rotative à l'unité de vitesse de rotation variable (16, 30) et à l'unité de couplage unidirectionnelle (58).

5. Dispositif selon l'une quelconque des revendications 1 à 4, **caractérisé en ce que** l'unité de couplage unidirectionnelle (58) comporte un accouplement à roue libre.

6. Dispositif selon l'une quelconque des revendications 1 à 5, **caractérisé en ce que** la deuxième interface d'entrée (44) comporte une roue solaire (44) et/ou **en ce que** la première interface d'entrée (36) comporte une couronne.

7. Dispositif selon l'une quelconque des revendications 1 à 6, **caractérisé en ce que** l'unité de vitesse de rotation variable (16, 30) comporte une pompe à cylindrée variable (16) et un moteur hydraulique à cylindrée constante (30), la pompe à cylindrée variable (16) étant apte à être actionnée par l'arbre (10) actionnable par l'unité d'entraînement (8), le moteur hydraulique à cylindrée constante (30) étant apte à être actionné par voie hydraulique par la pompe à cylindrée variable (16), la pompe à cylindrée variable (16) comportant un arbre qui peut être couplé avec l'engrenage planétaire (38).
